# EUROPÄISCHE PATENTSCHRIFT

(11) **EP 3 033 645 B1**
(45) Veröffentlichungstag und Bekanntmachung des Hinweises auf die Patenterteilung: **02.09.2020**
(21) Anmeldenummer: 14744022.6
(22) Anmeldetag: 18.07.2014
(51) Int. Cl.: G02B 21/00

(54) **HOCHAUFLÖSENDE SCANNING-MIKROSKOPIE**
HIGH-RESOLUTION SCANNING MICROSCOPY
MICROSCOPIE À BALAYAGE HAUTE RÉSOLUTION

(30) Priorität: 15.08.2013 DE 102013013792; 15.11.2013 DE 102013019347
(43) Veröffentlichungstag der Anmeldung: 22.06.2016
(73) Patentinhaber: Carl Zeiss Microscopy GmbH, 07745 Jena (DE)
(72) Erfinder: KLEPPE, Ingo, 07749 Jena (DE); NOVIKAU, Yauheni, 07743 Jena (DE); NIETEN, Christoph, 07745 Jena (DE); NETZ, Ralf, 07745 Jena (DE)
(74) Vertreter: Loritz, Rainer
(86) Internationale Anmeldenummer: PCT/EP2014/065500
(87) Internationale Veröffentlichungsnummer: WO 2015/022145

(56) Entgegenhaltungen:
- WO-A1-2013/135487
- US-A1- 2007 057 211
- US-A1- 2012 019 821
- US-A1- 2013 135 715
- P. SARDER ET AL: "Deconvolution methods for 3-D fluorescence microscopy images", IEEE SIGNAL PROCESSING MAGAZINE, Bd. 23, Nr. 3, Mai 2006 (2006-05), Seiten 32-45, XP055004884, ISSN: 1053-5888, DOI: 10.1109/MSP.2006.1628876
- SANJEE ABEYTUNGE ET AL: "FPGA-based electronics for confocal line scanners with linear detector arrays", PROCEEDINGS OF SPIE, Bd. 7184, 12. Februar 2009 (2009-02-12), Seite 71840A, XP055160209, ISSN: 0277-786X, DOI: 10.1117/12.809423
- W B Amos ET AL: "Instruments for Fluorescence Imaging Chapter 4 pp67-108 in Protein Localization by Fluorescence Microscopy", Protein Localization by Fluorescence Microscopy, 1. Januar 2000 (2000-01-01), Seiten 67-108, XP055160219, Gefunden im Internet: URL:http://www.mba.ac.uk/pdf/Instrumentsfo rFluorescence.pdf [gefunden am 2015-01-07]

## Beschreibung

Die Erfindung bezieht sich auf ein Mikroskop zur hochauflösenden Scanning-Mikroskopie einer Probe, mit einer Beleuchtungseinrichtung zum Beleuchten der Probe, einer Abbildungseinrichtung zum Scannen eines Punkt- oder Linien-Spots über die Probe und zum Abbilden des Punkt- oder Linien-Spots in ein beugungsbegrenztes, ruhendes Einzelbild in eine Detektionsebene, einer Detektoreinrichtung zum Erfassen des Einzelbildes in der Detektionsebene für verschiedene Scanpositionen mit einer Ortauflösung, einer Auswerteeinrichtung zum Auswerten einer Beugungsstruktur des Einzelbildes für die Scanpositionen aus Daten der Detektoreinrichtung und zum Erzeugen eines Bildes der Probe, das eine Auflösung aufweist, die über die Beugungsgrenze gesteigert ist. Die Erfindung bezieht sich weiter auf ein Verfahren zur hochauflösenden Scanning-Mikroskopie einer Probe, bei dem die Probe beleuchtet wird, ein scannend über die Probe geführter Punkt- oder Linien-Spot in ein Einzelbild abgebildet wird, wobei der Spot beugungsbegrenzt in das Einzelbild abgebildet wird und das Einzelbild ruhend in einer Detektionsebene liegt, für verschiedene Scanpositionen das Einzelbild mit einer Ortauflösung erfaßt wird, so daß eine Beugungsstruktur des Einzelbildes erfaßt wird, für jede Scanposition die Beugungsstruktur des Einzelbildes ausgewertet wird und ein Bild der Probe erzeugt wird, das eine Auflösung aufweist, die über die Beugungsgrenze gesteigert ist.

Ein solches Mikroskop bzw. Mikroskopieverfahren ist beispielsweise aus der Veröffentlichung C. Müller und J. Enderlein, Physical Review Letters, 104, 198101 (2010), oder der EP 2317362 A1 bekannt, die auch weitere Nachweise zum Stand der Technik aufführt.

Dieser Ansatz erreicht eine Auflösungserhöhung, indem ein Spot beugungsbegrenzt auf eine Detektionsebene abgebildet wird. Die beugungsbegrenzte Abbildung bildet einen Punkt-Spot als Airy-Scheibe ab. Diese Beugungsscheibe wird in der Detektionsebene so erfaßt, daß ihre Struktur aufgelöst werden kann. Bezogen auf die Abbildungsleistung des Mikroskops erfolgt somit detektorseitig eine Überabtastung. Bei der Abbildung eines Punkt-Spots wird die Form der Airy-Scheibe aufgelöst. Durch geeignete Auswertung der Beugungsstruktur, die in den genannten Schriften geschildert ist , erreicht man eine Auflösungssteigerung um den Faktor 2 über die Beugungsgrenze. Detektionsseitig ist es dabei jedoch unvermeidlich, daß für jeden Punkt, der auf der Probe in dieser Weise abgetastet wird, verglichen mit einem herkömmlichen Laser-Scanning-Mikroskop (nachfolgend auch als LSM abgekürzt) ein Einzelbild mit einem Vielfachen an Bildinformation aufgenommen werden muß. Erfaßt man die Struktur des Einzelbildes des Spots beispielsweise mit 16 Pixeln, hat man pro Spot nicht nur die 16-fache Datenmenge, ein einzelnes Pixel enthält auch im Mittel nur ein 1/16 der Strahlungsintensität, die bei einer üblichen Pinhole-Detektion auf den Detektor eines LSM fallen würde. Da die Strahlungsintensität über die Struktur des Einzelbildes, beispielsweise die Airy-Scheibe, natürlich nicht gleichmäßig verteilt ist, fällt am Rande dieser Struktur tatsächlich sogar noch bedeutend weniger Strahlungsintensität an, als der Mittelwert von 1/n bei n-Pixeln.

Man steht also vor der Aufgabe, detektorseitig Strahlungsmengen hochauflösend erfassen zu können. Herkömmliche CCD-Arrays, die üblicherweise in der Mikroskopie eingesetzt werden, erreichen kein hinreichendes Signal/Rausch-Verhältnis, so daß selbst eine Verlängerung der Bildaufnahmedauer, die per se schon als nachteilig in der Anwendung wäre, nicht weiterhelfen würde. APD-Arrays sind auch mit einem zu hohen Dunkelrauschen behaftet, so daß auch eine Verlängerung der Meßdauer in einem unzureichenden Signal/Rausch-Verhältnis resultieren würde. Gleiches gilt für CMOS-Detektoren, die zudem hinsichtlich der Detektorelementgröße nachteilig sind, da das beugungsbegrenzte Einzelbild des Spots auf zu wenige Pixel fallen würde. Ähnliche Bauraumprobleme bringen PMT-Arrays mit sich; die Pixel sind dort ebenfalls zu groß. Die Bauraumprobleme ruhen insbesondere daher, daß eine Realisierung eines Mikroskops zur Hochauflösung vom Entwicklungsaufwand wie von der Geräteverbreitung nur realisierbar ist, wenn eine Integration in bestehende LSM-Konstruktionen möglich ist. Hier sind jedoch bestimmte Größen des Einzelbildes vorgegeben. Ein flächenmäßig größerer Detektor könnte nur dann eingebracht werden, wenn zusätzlich eine Optik vorgesehen wird, die das Bild noch einmal signifikant, d. h. um mehrere Größenordnungen aufweitet. Eine solche Optik gestaltet sich, will man die beugungsbegrenzte Struktur ohne weitere Abbildungsfehler erhalten, als sehr aufwendig.

Es sind im Stand der Technik andere Verfahren bekannt, welche die geschilderten detektionsseitigen Probleme bei der Hochauflösung vermeiden. So ist beispielsweise in der EP 1157297 B1 ein Verfahren angesprochen, bei dem mittels strukturierter Beleuchtung nicht linearer Prozesse ausgenützt werden. Eine strukturierte Beleuchtung wird in mehreren Dreh- und Ortslagen über die Probe verschoben und die Probe in diesen unterschiedlichen Zuständen auf einen Weitfelddetektor abgebildet, für den die geschilderten Beschränkungen nicht bestehen.

Ein Verfahren, das ohne die geschilderten Detektoreinschränkungen ebenfalls eine Hochauflösung (also eine Auflösung eines Probenbildes jenseits der Beugungsgrenze) erreicht, ist aus der WO 2006127692 und der DE 102006021317 bekannt. Dieses mit PALM abgekürzte Verfahren verwendet eine Markierungssubstanz, welche mittels eines optischen Aktivierungssignals aktiviert werden kann. Nur im aktivierten Zustand kann die Markierungssubstanz mit Anregungsstrahlung zur Abgabe von bestimmter Fluoreszenzstrahlung angeregt werden; nicht aktivierte Moleküle senden auch nach Einstrahlung von Anregungsstrahlung keine Fluoreszenzstrahlung aus. Die Aktivierungsstrahlung schaltet die Aktivierungssubstanz also in einen Zustand, in dem sie zur Fluoreszenz anregbar ist. Man spricht deshalb allgemein von einem Umschaltsignal. Dieses wird nun so aufgebracht, daß zumindest ein gewisser Anteil der aktivierten Markierungsmoleküle von benachbarten, ebenfalls aktivierten Markierungsmolekülen so beabstandet ist, daß die aktivierten Markierungsmoleküle gemessen an der optischen Auflösung der Mikroskopie getrennt oder nachträglich trennbar sind. Man spricht von Isolierung der aktivierten Moleküle. Für diese isolierten Moleküle ist es einfach, das Zentrum deren auflösungsbegrenzt bedingter Strahlungsverteilung zu ermitteln und somit rechnerisch die Lage der Moleküle mit höherer Genauigkeit zu bestimmen, als es die optische Abbildung eigentlich zuläßt. Zum Abbilden der gesamten Probe benutzt das PALM-Verfahren die Tatsache, daß die Wahrscheinlichkeit, mit der ein Markierungsmolekül durch das Umschaltsignal bei gegebener Intensität des Umschaltsignals aktiviert wird, für alle Markierungsmoleküle gleich ist. Die Intensität des Umschaltsignals wird also so aufgebracht, daß die gewünschte Isolierung erfolgt. Diese Verfahrensschritte werden so lange wiederholt, bis möglichst alle Markierungsmoleküle einmal in einer Teilmenge, die zur Fluoreszenz angeregt wurde, enthalten waren.

Im Rahmen der Erfindung wird der auf der Probe abgetastete Spot ruhend in eine Detektionsebene abgebildet. Die Strahlung aus der Detektionsebene wird dann nicht-abbildend umverteilt und auf das Detektorarray geleitet. Der Begriff "nicht-abbildend" ist dabei auf das in der Detektionsebene vorhandene Einzelbild bezogen. Einzelne Flächenbereiche dieses Einzelbildes können natürlich dennoch gemäß den Abbildungsgesetzen abgebildet werden. Insofern kann zwischen Detektorarray und Umverteilungselement durchaus abbildende Optik liegen. Das in der Detektionsebene vorliegende Einzelbild bleibt jedoch bei der Umverteilung als solches nicht erhalten.

Der Begriff "beugungsbegrenzt" soll nicht auf die Beugungsgrenze gemäß der Abbe'schen Theorie beschränkt sein, sondern auch Fälle erfassen, in denen auf Grund realer Unzulänglichkeiten oder Einschränkungen das theoretische Maximum um 20 % verfehlt wird. Auch dann hat das Einzelbild eine Struktur, die hier als Beugungsstruktur bezeichnet wird. Sie wird überabgetastet.

Dieses Prinzip ermöglicht es, ein Detektorarray zu verwenden, das in seiner Größe nicht zum Einzelbild paßt. Das Detektorarray ist vorteilhaft in mindestens einer Ausdehnung größer oder kleiner als das zu erfassende Einzelbild. Unter den Begriff der unterschiedlichen geometrischen Ausbildung fallen sowohl eine unterschiedliche Ausdehnung des Detektorarrays als auch eine Anordnung mit unterschiedlichen Aspektverhältnis bezogen auf Höhe und Breite der Ausdehnung des Einzelbildes in der Detektionsebene. Die Pixel des Detektorarrays können zusätzlich für die erforderliche Auflösung zu groß sein. Auch ist es nun zulässig, daß der Umriß der Pixelanordnung des Detektorarrays grundlegend anders ist, als der Umriß, den das Einzelbild in der Detektionsebene hat. Letztlich hat das Detektorarray gemäß dem der Erfindung zugrundeliegenden Prinzip eine andere Größe als das Einzelbild in der Detektionsebene. Die Umverteilung im Verfahren bzw. das Umverteilungselement im Mikroskop ermöglichen es, ein Detektorarray zu wählen, ohne die Abmessungseinschränkungen und Pixelgrößeneinschränkungen beachten zu müssen, welche durch das Einzelbild und dessen Größe entstehen. Insbesondere kann als Detektorarray eine Detektorzeile verwendet werden.

Das Bild der Probe entsteht LSM-üblich durch Abtasten der Probe mit dem Spot aus einer Vielzahl von Einzelbildern, die jeweils einem anderen Abtastort, also einer anderen Scanposition, zugeordnet sind.

Das Konzept gemäß dem der Erfindung zugrundeliegenden Prinzip kann auch in parallelisierter Form für mehrere Spots gleichzeitig durchgeführt werden, wie dies für die Laserscanningmikroskopie bekannt ist. Es werden dann mehrere Spots auf der Probe scannend abgetastet, und die Einzelbilder der mehreren Spots liegen ruhend in der Detektionsebene nebeneinander. Sie werden dann entweder von einem gemeinsamen Umverteilungselement, das flächenmäßig entsprechend groß ist bzw. von mehreren einzelnen Umverteilungselementen umverteilt und dann auf ein entsprechend größeres einzelnes oder mehrere einzelne Detektorarrays geleitet.

Die nachfolgende Beschreibung konzentriert sich exemplarisch auf die Abtastung mit einem einzelnen Punkt-Spot. Dies soll jedoch nicht als Einschränkung verstanden werden, und die erläuterten Merkmale und Grundsätze gelten sinngemäß auch für die parallel Abtastung mehrerer Punkt-Spots wie auch für die Verwendung eines Linienspots. Letzterer ist natürlich nur quer zur Linienerstreckung beugungsbegrenzt, so daß die diesbezüglichen Merkmale dieser Beschreibung dann nur in einer Richtung (quer zur Linienerstreckung) gelten.

Durch das Vorgehen gemäß dem der Erfindung zugrundeliegenden Prinzip kann das ISM-Verfahren bei zufriedenstellender Geschwindigkeit und mit vertretbarem apparativen Aufwand ausgeführt werden. Das der Erfindung zugrundeliegende Prinzip eröffnet für ein hochauflösendes Mikroskopieprinzip ein breites Anwendungsfeld, das so bislang nicht gegeben war.

Eine Möglichkeit der Umverteilung bzw. das Umverteilungselement zu realisieren besteht darin, ein Bündel aus Lichtleitfasern zu verwenden. Diese können vorzugsweise als Multimode-Lichtleitfasern ausgeführt werden. Das Bündel hat einen Eingang, der in der Detektionsebene angeordnet ist und in seinem Umriß den Ausdehnungen des beugungsbegrenzten Einzelbildes in der Detektionsebene genügt. Am Ausgang sind die Lichtleitfasern hingegen in der geometrischen Anordnung angeordnet, welche durch das Detektorarray vorgegeben ist, und welche sich von der des Eingangs unterscheidet. Die ausgangsseitigen Enden der Lichtleitfasern können dabei direkt auf die Pixel des Detektorarrays geführt werden. Besonders vorteilhaft ist es, wenn der Ausgang des Bündels in einem Stecker zusammengefaßt ist, der bequem auf eine Detektorzeile, beispielsweise eine APD- oder PMT-Zeile aufgesteckt werden kann.

Für das Verständnis des der Erfindung zugrundeliegenden Prinzips ist es wichtig, zwischen den Pixeln des Detektorarrays und Bildpixeln zu unterscheiden, mit denen das Einzelbild in der Detektionsebene aufgelöst wird. Jedes Bildpixel ist i. d. R. genau einem Pixel des Detektorarrays zugeordnet; hinsichtlich ihrer Anordnung sind die beiden aber unterschiedlich. Kennzeichnend für das der Erfindung zugrundeliegende Prinzip ist es unter anderem, daß in der Detektionsebene die Strahlung an Bildpixeln aufgenommen wird, welche hinsichtlich ihrer Größe und Anordnung eine Überabtastung des Einzelbildes bewirken. Auf diese Weise wird die Struktur des Einzelbildes aufgelöst, die aufgrund der beugungsbegrenzten Erzeugung des Einzelbildes eine Beugungsstruktur ist. Das Umverteilungselement hat eine Eingangsseite, an der diese Bildpixel vorgesehen sind. Die Eingangsseite liegt in der Detektionsebene. Das Umverteilungselement leitet die Strahlung an jedem Bildpixel zu einem der Pixel des Detektorarrays. Die Zuordnung von Bildpixeln zu Pixeln des Detektorarrays hält die Bildstruktur nicht aufrecht, weshalb die Umverteilung bezogen auf das Einzelbild nicht-abbildend ist. Das der Erfindung zugrundeliegende Prinzip könnte also auch dadurch charakterisiert werden, daß in einem gattungsgemäßen Mikroskop die Detektoreinrichtung ein nicht-abbildendes Umverteilungselement aufweist, das eine in der Detektionsebene liegende Eingangsseite aufweist, an der die Strahlung mit Bildpixeln aufgenommen wird. Das Umverteilungselement weist weiter eine Ausgangsseite auf, an der die an den Bildpixeln aufgenommene Strahlung Pixeln eines Detektorarrays zugeführt wird, wobei die Strahlung von der Eingangsseite zur Ausgangsseite bezogen auf das Einzelbild nicht-abbildend umverteilt ist. Analog könnte das Verfahren gemäß dem der Erfindung zugrundeliegenden Prinzip dadurch charakterisiert werden, daß bei einem gattungsgemäßen Verfahren die Strahlung in der Detektionsebene mit Bildpixeln aufgenommen wird, die bezogen auf das Einzelbild nicht-abbildend auf Pixel des Detektorarrays umverteilt werden. Das Detektorarrays unterscheidet sich hinsichtlich Anordnung und/Größe seiner Pixel von der Anordnung und/oder Größe der Bildpixel in der Detektionsebene. Weiter sind die Bildpixel in der Detektionsebene vom Umverteilungselement so bereitgestellt, daß bezogen auf die Beugungsgrenze die Beugungsstruktur des Einzelbildes überabgetastet ist.

Bei hochempfindlichen Detektorarrays ist es bekannt, daß benachbarte Pixel bei hohen Strahlungsintensitätsunterschieden eine Störung durch Übersprechen zeigt. Um solches zu vermeiden, ist eine Weiterbildung bevorzugt, bei der die Lichtleitfasern so vom Eingang zum Ausgang geführt sind, daß am Ausgang benachbarte Lichtleitfasern auch am Eingang benachbart sind. Da das beugungsbegrenzte Einzelbild keine sprungartigen Strahlungsintensitätsänderungen zeigt, stellt eine derartige Ausgestaltung des Umverteilungselementes automatisch sicher, daß nebeneinanderliegende Pixel des Detektorarrays möglichst geringe Strahlungsintensitätsunterschiede erhalten, was das Übersprechen minimiert.

Anstelle einer auf Lichtleitfasern basierten Umverteilung ist es auch möglich, das Umverteilungselement mit einem Spiegel auszurüsten, der unterschiedlich geneigte Spiegelelemente hat. Ein solcher Spiegel kann beispielsweise als Facettenspiegel, DMD oder adaptiver Spiegel ausgestaltet werden, wobei bei den letzten beiden Varianten eine entsprechende Einstellung bzw. Ansteuerung die Neigung der Spiegelelemente sicherstellt. Die Spiegelelemente leiten die Strahlung aus der Detektionsebene auf die Pixel des Detektorarrays, dessen geometrische Ausbildung sich von der der Spiegelelemente unterscheidet.

Die Spiegelelemente stellen wie die Lichtleitfaserenden im Eingang des Lichtleitfaserbündels die Bildpixel hinsichtlich der Auflösung der Beugungsstruktur des Einzelbildes dar. Ihre Größe ist für die Übertastung entscheidend, nicht (mehr) die Pixelgröße des Detektorarrays. Insofern wird hier auch eine Gruppe aus mehreren Einzeldetektoren als Detektorarray verstanden, da diese in ihrer Anordnung immer anders (also größer) als die Bildpixel in der Detektionsebene sind.

Bei LSM werden je nach erwünschter Auflösung unterschiedliche Objektive verwendet. Der Wechsel eines Objektivs verändert die Ausdehnung eines Einzelbildes in der Detektionsebene. Es ist deshalb bevorzugt, der Detektionsebene in Abbildungsrichtung eine Zoomoptik zur Anpassung der Größe des Einzelbildes an die der Detektoreinrichtung vorzuordnen. Eine solche Zoomoptik variiert die Größe des Einzelbildes in einem Prozentbereich deutlich kleiner 100 %, ist also sehr viel einfacher auszuführen, als eine Vervielfachung der Größe des Einzelbildes, die eingangs als nachteilig geschildert wurde.

Die Beleuchtung der Probe erfolgt bevorzugt wie in einem üblichen LSM ebenfalls scannend, obwohl dies nicht zwingend ist. Man erreicht dann allerdings die maximale Auflösungssteigerung. Beleuchtet man die Probe scannend, ist es zweckmäßig, daß die Beleuchtungseinrichtung und die Abbildungseinrichtung eine gemeinsame Scaneinrichtung haben, welche einen Beleuchtungsspot über die Probe führt und zugleich den mit dem Beleuchtungsspot zusammenfallenden Spot, an dem die Probe abgebildet wird, in Bezug auf den Detektor wieder descannt, so daß das Einzelbild ruhend in der Detektionsebene ist. Bei einem solchen Aufbau kann man die Zoomoptik in dem gemeinsamen Teil von Beleuchtungs- und Abbildungseinrichtung setzen. Sie erlaubt es dann nicht nur, die Anpassung des Einzelbildes an die Größe des Detektors in der Detektionsebene vorzunehmen, sondern erlaubt auch zusätzlich die verfügbare Beleuchtungsstrahlung ohne Randverluste vollständig in die Objektivpupille, welche sich mit Wahl des Objektives ändern kann, einzukoppeln.

Ein strahlungsintensitätabhängiges Übersprechen zwischen nebeneinanderliegenden Pixeln des Detektorarrays kann, wie bereits eingangs erwähnt, bei Umverteilung mittels Lichtleitfaserbündel durch geeignete Anordnung der Lichtleitfasern im Bündel reduziert werden. Zusätzlich oder alternativ ist es auch möglich, eine Kalibrierung durchzuführen. Dazu wird jede Lichtleitfaser nacheinander mit Strahlung beaufschlagt und das Störsignal in benachbarten Pixeln erfaßt. Auf diese Weise wird eine Kalibriermatrix aufgestellt, mit der bei der späteren Mikroskopie der Probe ein strahlungsintensitätsabhängiges Übersprechen nebeneinanderliegender Pixel korrigiert wird.

Die Auflösung der Beugungsstruktur des Einzelbildes erlaubt es zusätzlich, eine Bewegungsrichtung des Spots zu ermitteln, entlang dieser während des Abtastens der Probe verschoben wird. Diese Bewegungsrichtung ist zwar grundsätzlich aus der Mechanik des Scanners (beispielsweise eines Scanspiegels oder eines beweglichen Probentisches) bekannt, jedoch ergeben sich hier mechanisch bedingte Restungenauigkeiten. Diese können eliminiert werden, indem Signale einzelner Pixel des Detektorarrays mittels Kreuzkorrelation ausgewertet werden. Dabei macht man sich zunutze, daß sich, bezogen nebeneinanderliegende Bildpixel in der Probe aufgrund der beugungsbegrenzten Abbildung des Spots in einem gewissen Maß überlappen, ihre Zentren jedoch nebeneinander liegen. Unterzieht man die Signale solcher Bildpixel einer Kreuzkorrelation, kann man eine Restungenauigkeit, welche aufgrund unvermeidlicher Toleranzen der Scanmechanik verbleibt, reduzieren bzw. vollständig eliminieren.

Neben der erhöhten Auflösung läßt sich über die räumliche und zeitliche Korrelation der Signale aus einer Meßreihe der einzelnen Detektorelemente (die Bildpixeln in der Detektionsebene zugeordnet sind) eine zeitliche Veränderung der Fluoreszenz im vom Spot erfaßten Detektionsvolumen erfassen, z. B. können aus einer zeitlichen Korrelation wie bei der Fluoreszenzkorrelationsspektroskopie Diffusionskoeffizienten bestimmt werden und auch durch das Einbeziehen der räumlichen Korrelation zwischen Bildpixeln gerichtete Diffusion und Diffusionsbarrieren visualisiert werden. Bewegungsabläufe der Fluoreszenzmoleküle sind darüber hinaus auch für Trackinganwendungen von großem Interesse, da dort der Beleuchtungsspot der Bewegung der Fluoreszenzmoleküle folgen soll. Die hier beschriebene Anordnung erlaubt es hochgenau die Bewegungsrichtung schon innerhalb einer Pixelbeichtungszeit zu ermitteln. Es ist deshalb als Weiterbildung bevorzugt, daß Veränderungen in der Probe erfaßt werden, indem bei in der Probe ruhendem Punkt- oder Linien-Spot eine zeitliche Veränderung des beugungsbegrenzten Einzelbildes ermittelt und ausgewertet wird.

Das Vorgehen gemäß dem der Erfindung zugrundeliegenden Prinzip ermöglicht weiter bei gescannter Beleuchtung die Beleuchtungsverteilung zu modifizieren, beispielsweise mittels eines Phasenfilters. Kann damit sehr einfach das Verfahren realisiert werden, wie es beschrieben ist in Gong et al., Opt. Let., 34, 3508 (2009). Soweit hier ein Verfahren beschrieben wird, realisiert ein Steuergerät diese Verfahrensschritte im Betrieb des Mikroskops.

Nachfolgend wird das der Erfindung zugrundeliegende Prinzip beispielsweise anhand der beigefügten Zeichnungen noch näher erläutert. Es zeigen:
- Fig. 1: eine Schemadarstellung eines Laser-Scanning-Mikroskops zur hochauflösenden Mikroskopie,
- Fig. 2: eine vergrößerte Darstellung einer Detektoreinrichtung des Mikroskops der Fig. 1 ;
- Fig. 3: und 4 Draufsichten auf mögliche Ausführungsformen der Detektoreinrichtung 19 in einer Detektionsebene,
- Fig. 5: eine Weiterbildung des Mikroskops der Fig. 1 durch eine Zoom-Optik zur Anpassung der Größe des Detektorfelde,
- Fig. 6: eine Abwandlung des Mikroskops der Fig. 5 hinsichtlich der Zoom-Optik sowie hinsichtlich einer Weiterbildung zur mehrfarbigen Abbildung,
- Fig. 7: eine Abwandlung des Mikroskops der Fig. 1, wobei die Abwandlung die Detektoreinrichtung betrifft, und
- Fig. 8: eine Abwandlung der Detektoreinrichtung 19 der Fig. 7.

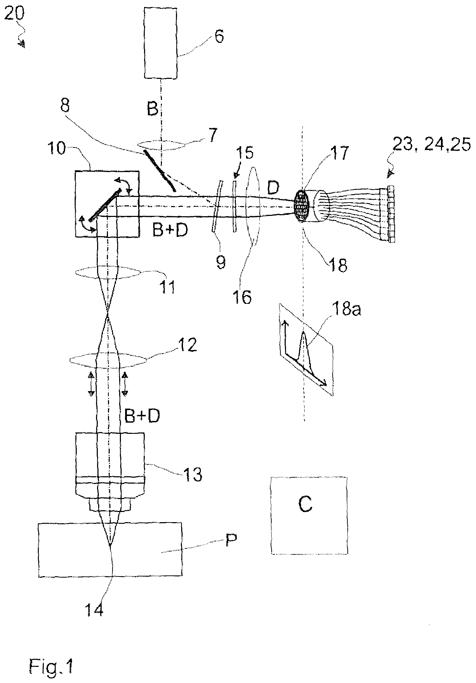

Fig. 1 zeigt schematisch ein Laserscanningmikroskop 1, das zum Mikroskopieren einer Probe 2 ausgebildet ist. Das Laserscanningmikroskop (nachfolgend als LSM abgekürzt) 1 wird von einem Steuergerät C gesteuert und umfaßt einen Beleuchtungsstrahlengang 3 sowie einen Abbildungsstrahlengang 4. Der Beleuchtungsstrahlengang beleuchtet einen Spot in der Probe 2, und der Abbildungsstrahlengang 4 bildet diesen Spot beugungsbegrenzt zur Detektion ab. Beleuchtungsstrahlengang 3 und Abbildungsstrahlengang 4 teilen sich eine Vielzahl von Elementen. Dies ist aber ebenso wenig zwingend, wie eine gescannte Spot-Beleuchtung der Probe 2. Diese könnte auch weitfeldbeleuchtet werden.

Die Beleuchtung der Probe 2 erfolgt im LSM 1 mittels eines bereitgestellten Laserstrahls 5, der über einen nicht weiter funktionell erforderlichen Umlenkspiegel 6 und eine Linse 7 auf einen Spiegel 8 eingekoppelt wird. Der Spiegel 8 sorgt dafür, daß der Laserstrahl 5 unter einem Reflexionswinkel auf einen Emissionsfilter 9 fällt. Zur übersichtlicheren Darstellung ist für den Laserstrahl 5 lediglich dessen Hauptachse eingezeichnet.

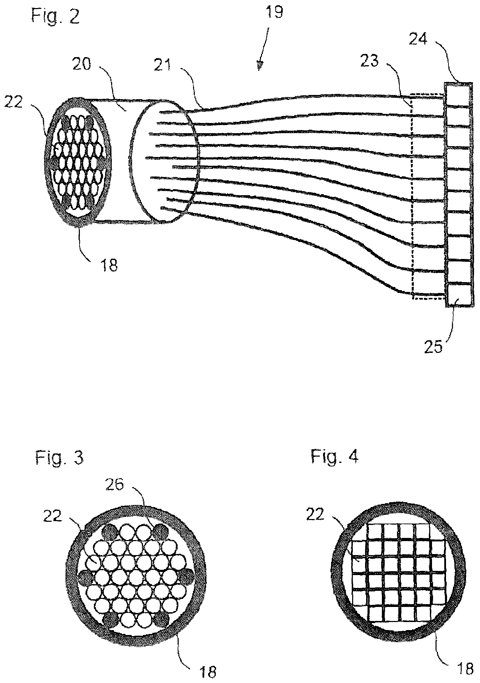

Nach Reflexion am Emissionsfilter 9 wird der Laserstrahl 5 von einem Scanner 10 zweiachsig abgelenkt und mittels Linsen 11 und 12 durch ein Objektiv 13 in einen Spot 14 in der Probe 2 fokussiert. Der Spot ist dabei in der Darstellung der Fig. 1 punktförmig, es ist jedoch auch ein linienförmiger Spot möglich. Im Spot 14 angeregte Fluoreszenzstrahlung wird über das Objektiv 13, die Linsen 11 und 12 wieder zum Scanner 10 gelangt, nachdem in Abbildungsrichtung wiederum ein ruhender Lichtstrahl vorliegt. Dieser fällt durch die Emissionsfilter 9 und 15, welche die Funktion haben, die Fluoreszenzstrahlung im Spot 14 hinsichtlich ihrer Wellenlänge zu selektieren und insbesondere von der Beleuchtungsstrahlung des Laserstrahls 5, die beispielsweise als Anregungsstrahlung dienen kann, zu trennen. Eine Linse 16 sorgt dafür, daß insgesamt der Spot 14 in ein beugungsbegrenztes Bild 17 abgebildet wird, welches in einer Detektionsebene 18 liegt. Die Detektionsebene 18 ist eine konjugierte Ebene zur Ebene, in welcher der Spot 14 in der Probe 2 liegt. Das Bild 17 des Spots 14 wird in der Detektionsebene 18 von einer Detektoreinrichtung 19 aufgenommen, die nachfolgend anhand der Figuren 2 bis 4 näher erläutert wird. Wesentlich ist hier, daß die Detektoreinrichtung 19 das beugungsbegrenzte Bild 17 des Spots 14 in der Detektionsebene 18 räumlich auflöst.

Die Intensitätsverteilung des Spots über den Detektionsquerschnitt (Gaussverteilung) in 18 ist als 18a darunter in Fig. 1 dargestellt

Das Steuergerät C steuert alle Komponenten des LSM 1, insbesondere Scanner 10 und Detektoreinrichtung 19. Das Steuergerät nimmt für verschiedene Scanstellungen die Daten jedes einzelnen Bildes 17 auf, analysiert dessen Beugungsstruktur und erzeugt ein hochaufgelöstes Gesamtbild der Probe 2.

Das LSM 1 der Fig. 1 ist exemplarisch für einen einzigen Spot, der auf der Probe abgetastet wird, dargestellt. Es kann jedoch zugleich auch zur Abtastung gemäß einem Linien-Spot verwendet werden, der sich beispielsweise senkrecht zur Zeichnungsebene der Fig. 1 erstreckt. Auch ist es möglich, das LSM 1 der Fig. 1 so auszuführen, daß mehrere nebeneinanderliegende Punkt-Spots in der Probe abgetastet werden. Ihre entsprechenden Einzelbilder 17 liegen dann in der Detektionsebene 18 ebenfalls nebeneinander. Die Detektoreinrichtung 19 ist dann entsprechend ausgestaltet, um die nebeneinanderliegenden Einzelbilder 17 in der Detektionsebene 18 zu erfassen.

Die Detektoreinrichtung 19 ist vergrößert in Fig. 2 dargestellt. Sie besteht aus einem Lichtleitfaserbündel 20, welches ein Detektorarray 24 speist. Das Lichtleitfaserbündel 20 ist aus Einzellichtfasern 21 aufgebaut. Die Enden der Lichtleitfasern 21 bilden den Lichtleitfaserbündeleingang 22, der in der Detektionsebene 18 liegt. Die einzelnen Enden der Lichtleitfasern 21 stellen somit Pixel dar, mit denen das beugungsbegrenzte Bild 17 des Spots 14 aufgenommen wird. Da der Spot 14 in der Ausführungsform der Fig. 1 exemplarisch ein Punkt-Spot ist, ist das Bild 17 ein Airy-Scheibchen, dessen Ausdehnung innerhalb des Kreises liegt, welcher in den Figuren 1 und 2 die Detektionsebene 18 veranschaulicht. Die Ausdehnung des Lichtleitfaserbündeleingangs 22 ist also so groß, daß damit die Ausdehnung der Airy-Scheibe abgedeckt wird. Die einzelnen Lichtleitfasern 21 im Leichtleitfaserbündel 20 sind an ihren Ausgängen in eine andere geometrische Anordnung gebracht, als am Lichtleitfaserbündeleingang 22, nämlich in Form eines längserstreckten Steckers 23, in dem die ausgangsseitigen Enden der Lichtleitfasern 21 nebeneinander liegen. Der Stecker 23 ist passend zur geometrischen Anordnung der Detektorzeile 24 ausgebildet, d. h. jedes ausgangsseitige Ende einer Lichtleitfaser 21 liegt genau vor einem Pixel 25 der Detektorzeile 24.

Die geometrische Ausdehnung des Umverteilungselementes ist ganz grundsätzlich, d. h. unabhängig von seiner Realisierung, die in Fig. 4 durch ein Faserbündel erfolgt, eingangsseitig an die Ausdehnung des Einzelbildes (bzw. im Falle mehrerer Punkt-Spots der nebeneinanderliegenden Einzelbilder) angepaßt. Das Umverteilungselement hat die Funktion, aus der Detektionsebene 18 die Strahlung so aufzunehmen, daß gemessen am Abtasttheorem die Intensitätsverteilung des Einzelbildes 17 bezogen auf die Beugungsgrenze überabgetastet wird, das Umverteilungselement hat also in der Detektionsebene 18 liegende Pixel (in der Bausweise der Fig. 3 durch die Eingangsenden der Lichtleitfasern gebildet), die mindestens um den Faktor 2 kleiner sind als die kleinste auflösbare Struktur, die sich aus der Beugungsgrenze unter Berücksichtigung des Abbildungsmaßstabes in der Detektionsebene 18 ergibt.

Natürlich ist die Verwendung eines Steckers 23 nur eine von vielen Möglichkeiten, die ausgangsseitigen Enden der Lichtleitfasern 21 vor den Pixeln 25 anzuordnen. Gleichermaßen ist es möglich, andere Verbindungen zu verwenden. Auch können die einzelnen Pixel 25 direkt mit den Lichtleitfasern 21 fusioniert werden. Es ist nicht einmal erforderlich, eine Detektorzeile 24 zu verwenden; stattdessen kann für jedes Pixel 25 ein einzelner Detektor verwendet werden.

Die Figuren 3 und 4 zeigen mögliche Ausführungsformen des Lichtleitfaserbündeleingangs 22. Die Lichtleitfasern 21 können am Lichtleitfaserbündeleingang 22 miteinander verschmolzen werden. Hierdurch wird ein höherer Füllfaktor erreicht, d. h. Lücken zwischen den einzelnen Lichtleitfasern 21 am Lichtleitfaserbündeleingang 22 werden minimiert. Das Verschmelzen führ andererseits zu einem gewissen Übersprechen zwischen benachbarten Lichtleitfasern. Möchte man dieses vermeiden, können die Lichtleitfasern geklebt werden. Auch ist eine quadratische Anordnung der Enden der Lichtleitfasern 21 möglich, wie Fig. 4 zeigt.

Bevorzugt sind die einzelnen Lichtleitfasern 21 so den einzelnen Pixeln 25 des Detektorarrays 24 zugeordnet, daß am Lichtleitfaserbündeleingang 22 nebeneinander liegende Lichtleitfasern 21 auch am Detektorarray 24 nebeneinander liegen. Durch dieses Vorgehen minimiert man Übersprechen zwischen benachbarten Pixeln 25, das beispielsweise durch Streustrahlung oder in der Signalverarbeitung der einzelnen Pixel 25 auftreten kann. Ist das Detektorarray 24 eine Zeile, kann man die entsprechende Anordnung dadurch erreichen, indem die Reihenfolge der Einzellichtleitfasern auf der Detektorzeile durch eine Spirale festgelegt wird, welche in Draufsicht auf die Detektionsebene 18 die Einzellichtleitfasern nacheinander verbindet.

Fig. 3 zeigt weiter noch Blindfasern 26, die in den Ecken der Anordnung der Lichtleitfasern 21 am Lichtleitfaserbündeleingang 22 liegen. Diese Blindfasern sind nicht auf Pixel 25 des Detektorarrays geführt. An den Orten der Blindfasern wäre keine für die Auswertung der Signale erforderliche Signalintensität mehr vorhanden. Man kann dadurch die Anzahl der Lichtleitfasern 21 und damit die Anzahl der Pixel 25 in der Detektorzeile 24 oder dem Detektorarray so reduzieren, daß beispielsweise mit 32 Pixeln gearbeitet werden kann. Solche Detektorzeilen 24 sind bereits anderweitig in Laser-Scanning-Mikroskopen im Einsatz, was den Vorteil hat, daß die Signalauswerteelektronik in solchen Laser-Scanning-Mikroskopen nur einmal vorgehalten werden muß und zwischen einer bereits bestehenden Detektorzeile 24 und der durch die Detektoreinrichtung 19 hinzugekommenen weiteren Detektorzeile 24 umgeschaltet wird.

Gemäß Fig. 4 werden Lichtleitfasern mit quadratischer Grundform für das Bündel verwendet. Sie haben ebenfalls einen hohen Abdeckungsgrad in der Detektionsebene, sammeln die Strahlung also effizient auf.

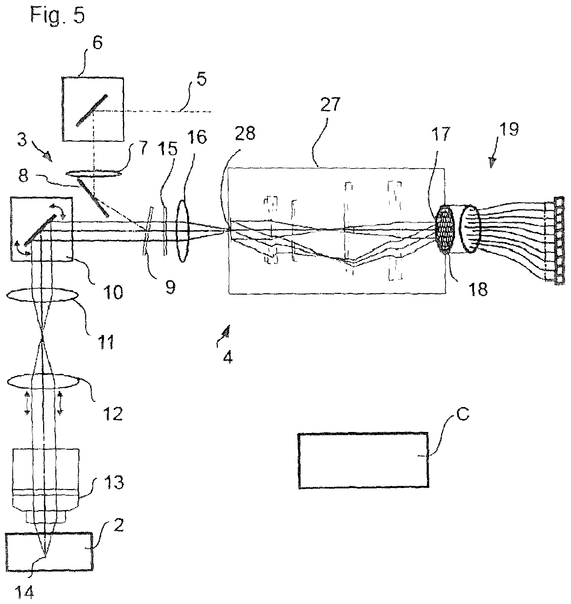

Fig. 5 zeigt eine Weiterbildung des LSM 1 der Fig. 1, in dem der Detektionsebene 18 eine Zoomoptik 27 vorgeordnet ist. Die konjugierte Ebene, in welcher bei der Bauweise der Fig. 1 die Detektionsebene 18 angeordnet wurde, bildet nun eine Zwischenbildebene 28, aus welcher die Zoomoptik 27 die Strahlung aufnimmt und zur Detektionsebene 18 leitet. Die Zoomoptik 27 erlaubt es, das Bild 17 optimal an die Ausdehnung des Eingangs der Detektoreinrichtung 19 anzupassen.

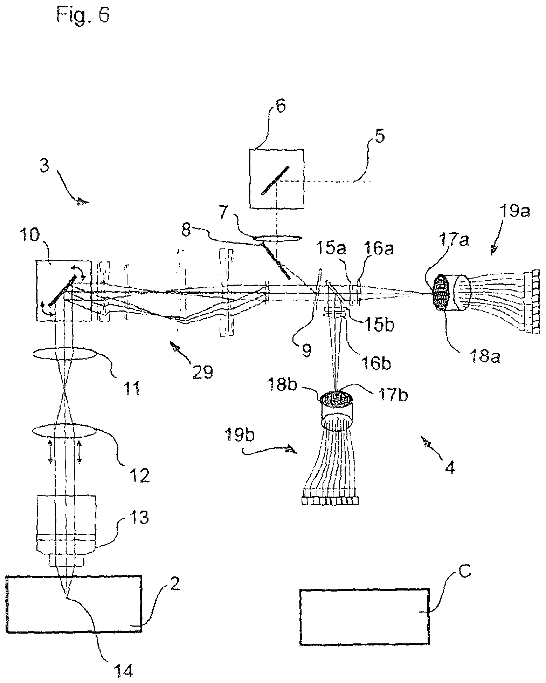

Fig. 6 zeigt eine nochmalige Abwandlung des Laser-Scanning-Mikroskops 1 der Fig. 1. Zum einen ist hier die Zoomoptik als Zoomoptik 29 so angeordnet, daß sie im Teil des Strahlenganges liegt, der sowohl vom Beleuchtungsstrahlengang 3 als auch vom Abbildungsstrahlengang 4 durchlaufen wird. Man erhält damit den Vorteil, daß nicht nur die Größe des Bildes 17 auf der Eingangsseite der Detektoreinrichtung 19 angepaßt werden kann, es kann auch bezüglich des Abbildungsstrahlenganges 4 die Pupillenfüllung des Objektivs 13 und damit die Ausnutzung des Laserstrahls 5 angepaßt werden.

Zusätzlich ist in Fig. 6 das LSM 1 noch zweikanalig ausgebildet, indem dem Emissionsfilter 9 ein Stahlteiler nachgeordnet ist, welcher die Strahlung in zwei getrennte Farbkanäle abtrennt. Die entsprechenden Elemente der Farbkanäle entsprechen jeweils den Elementen, die im LSM 1 der Fig. 1 dem Emissionsfilter 9 in Abbildungsrichtung nachgeordnet sind. Die Farbkanäle sind in der Darstellung der Fig. 6 durch das Bezugszeichensuffix "a" bzw. "b" unterschieden.

Natürlich ist die Realisierung mit zwei Farbkanälen unabhängig von der Verwendung der Zoomoptik 29. Die Kombination hat jedoch den Vorteil, daß eine Zoomoptik 27, die in beiden Farbkanälen jeweils eigenständig vorgesehen werden müßte und damit doppelt vorhanden wäre, nur einmal erforderlich ist. Selbstverständlich kann jedoch die Zoomoptik 27 auch in der Bauweise gemäß Fig. 1 zum Einsatz kommen und das LSM 1 der Fig. 6 kann auch ohne Zoomoptik 29 verwirklicht werden.

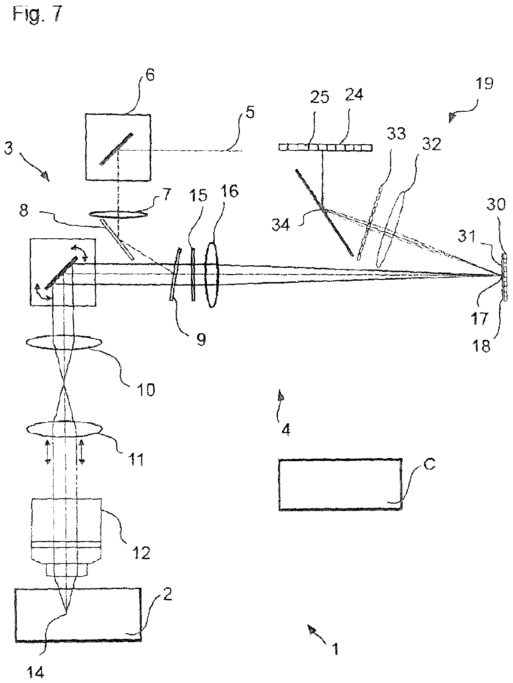

Fig. 7 zeigt eine Abwandlung des LSM 1 der Fig. 1 hinsichtlich der Detektoreinrichtung 19.

Die Detektoreinrichtung 19 weist nun einen Facettenspiegel 30 auf, der einzelne Facetten 31 trägt. Die Facetten 31 entsprechen hinsichtlich der Auflösung des Bildes 17 den Enden der Lichtleitfasern 21 am Lichtleitfaserbündeleingang 22. Die einzelnen Facetten 31 unterscheiden sich hinsichtlich ihrer Neigung zur optischen Achse des Strahlungseinfalls. Zusammen mit einer Linse 32 und einem Minilinsenarray 33 sowie einem nur der Strahlfaltung dienenden Umlenkspiegel 34 bildet jede Facette 31 einen Flächenabschnitt des Einzelbildes 17 auf ein Pixel 25 eines Detektorarrays 24 ab. Je nach Orientierung der Facetten 31 kann das Detektorarray 24 dabei bevorzugt ein 2D-Array sein, aber auch eine Detektorzeile ist möglich.

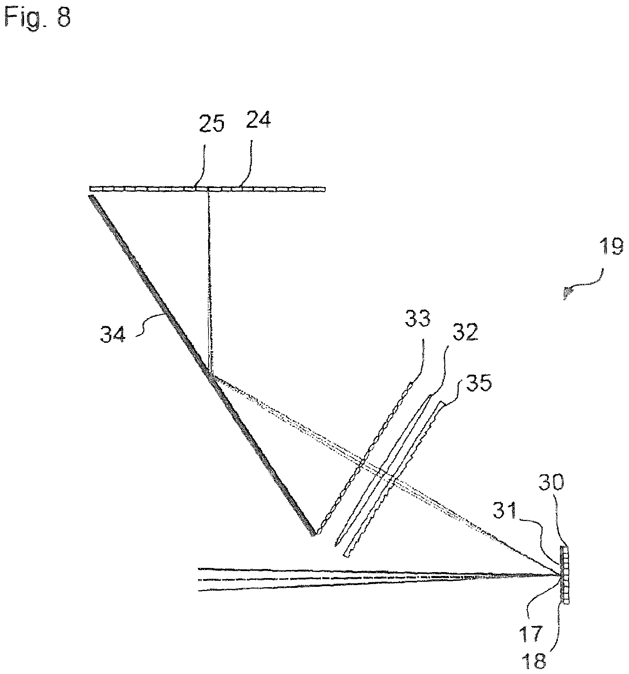

Fig. 8 zeigt eine Weiterbildung der Detektoreinrichtung 19 der Fig. 7, in welcher der Linse 32 noch ein refraktives Element 35 vorgeordnet ist, das die Strahlung besonders gut auf eine Detektorzeile verteilt.

Das Detektorarray 24 kann, wie bereits erwähnt, hinsichtlich seiner Geometrie ohne weitere Einschränkungen gewählt werden. Selbstverständlich muß das Umverteilungselement in der Detektoreinrichtung 19 dann auf das entsprechende Detektorarray angepaßt werden. Die einzelnen Pixel, mit denen das Bild 17 aufgelöst wird, sind letztlich hinsichtlich ihrer Größe nicht mehr durch das Detektorarray 24 vorgegeben, sondern durch das Element, welches die Umverteilung der Strahlung aus der Detektionsebene 18 bewirkt. Bei einer Airy-Scheibe ergibt sich der Durchmesser der Scheibe bei einer beugungsbegrenzten Abbildung gemäß der Formel 1,22 · λ/NA, wobei λ die mittlere Wellenlänge der abgebildeten Strahlung und NA die numerische Apertur des Objektivs 13 ist. Die Halbwertsbreite ist dann 0,15 · λ/NA. Um die Hochauflösung zu erreichen, genügt es, die Ortsauflösung bei der Detektion doppelt so groß wie die Halbwertsbreite zu gestalten, d. h. die Halbwertsbreite zweimal abzutasten. Ein Facettenelement 31 bzw. ein Ende einer Lichtleitfaser 21 am Lichtleitfaserbündeleingang 22 darf somit maximal halb so groß wie die Halbwertsbreite des beugungsbegrenzten Einzelbildes sein. Dies gilt natürlich unter Berücksichtigung des Abbildungsmaßstabes, den die Optik nach dem Objektiv 13 bewirkt. Im einfachsten Fall würde also ein 4x4-Array von Pixeln in der Detektionsebene 18 pro Halbwertsbreite mehr als genügen.

Die Zoomoptik, welche anhand der Figuren 5 und 6 erläutert wurde, erlaubt neben einer Anpassung dergestalt, daß die Beugungsverteilung des beugungsbegrenzten Bildes 17 des Spots 14 die Eingangsfläche der Detektoreinrichtung 19 optimal ausfüllt, auch noch eine weitere Betriebsart, wenn nämlich mehr als eine Airy-Scheibe in die Detektionsebene 18 abgebildet wird. Bei einer Messung, bei der mehr als eine Airy-Scheibe auf die Detektoreinrichtung 19 abgebildet wird, wird Licht aus weiteren Tiefenebenen der Probe 2 an den äußeren Pixeln der Detektoreinrichtung 19 detektiert. Im Zuge der Verarbeitung des Bildes erhält man dabei zusätzliche Signalstärke, ohne daß die Tiefenauflösung des LSM 1 beeinträchtigt wäre. Die Zoomoptik 27 bzw. 29 erlaubt es somit, einen Kompromiß zwischen Signal-/Rauschverhältnis des Bildes und Tiefenauflösung einzustellen.

Voraussetzung für das Gelingen der Auflösungserhöhung mit der genannten Methode ist das feine Abtasten der Fluoreszenz-Lichtfeldverteilung in der Pinhole-ebene (Detektionsebene). Um die Datentransfer- und Datenverarbeitungsrate gering zu halten, wird mit einer minimal notwendigen Anzahl von Detektor-(Faser)-elementen gearbeitet. Dieser Sachverhalt in Kombination mit der Abhängigkeit der Ausdehnung der Feldverteilung in der Detektionsebene vom Objektiv-Pupillendurchmesser und der Wellenlänge der Fluoreszenz macht es erforderlich, die objektivspezifische Ausdehnung der Sub-Airy-Feldverteilung für das optimale Abtasten an das Faserbündel relativ in der Größenausdehnung anpassen zu können.

Hierzu leistet die nachstehende Erfindung einen wichtigen Beitrag.

Die Erfindung wird durch die Merkmale der unabhängigen Patentansprüche charakterisiert.

Bevorzugte Weiterbildungen sind Gegenstand der abhängigen Ansprüche.

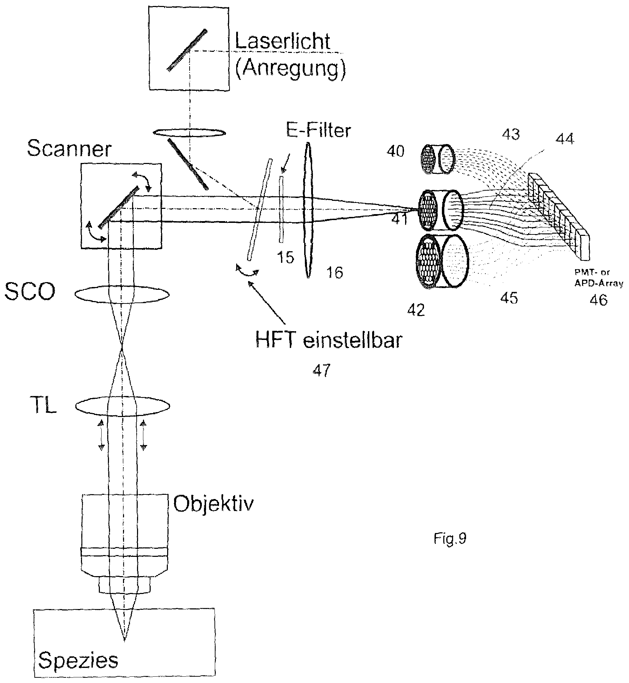

Weitere Erläuterungen zur Erfindung erfolgen nachstehend anhand der Zeichnungen Fig.9 -Fig.12.

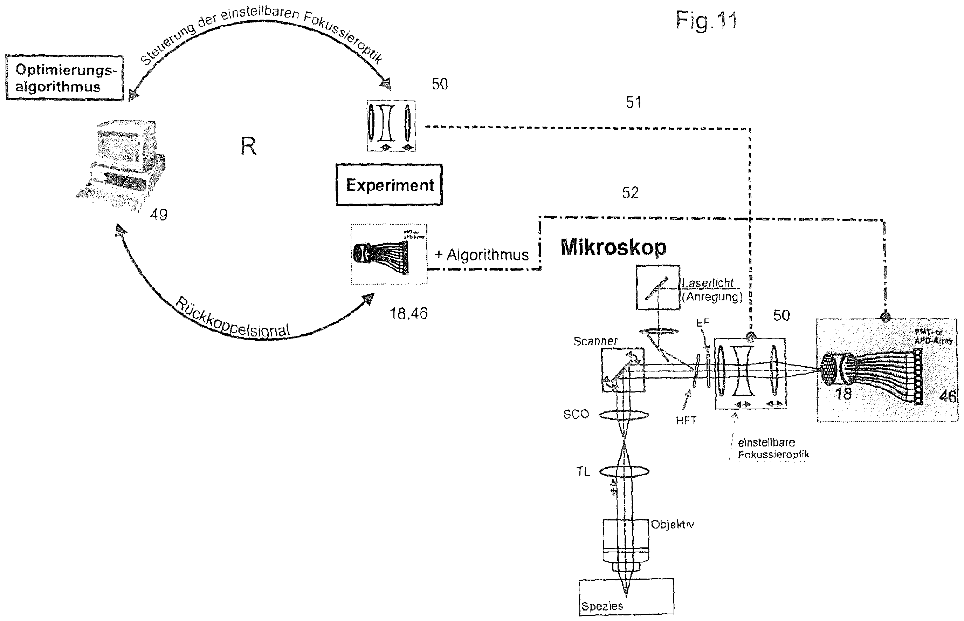

Der klassische vielfach verwendete Ansatz, die Feldverteilung in der Pinhole-Ebene in ihrer Ausdehnung kontrollieren zu können, besteht in der Verwendung eines Zoom-Systems in einer Pupillenebene. Alternativ kann eine Fokussieroptik mit variabler Brennweite und fester Fokuslage verwendet werden (siehe auch Abb. 11). Diese Variante besteht i.a. aus weniger Linsen als in einem Pupillen-Zoom-System benötigt werden. D.h. sowohl Komplexität als auch Kosten sind im Fall der Fokussieroptik geringer. Es wird lediglich ein Faserbündel benötigt, die Ausdehnung des Fluoreszenzlichts wird konstant gehalten.

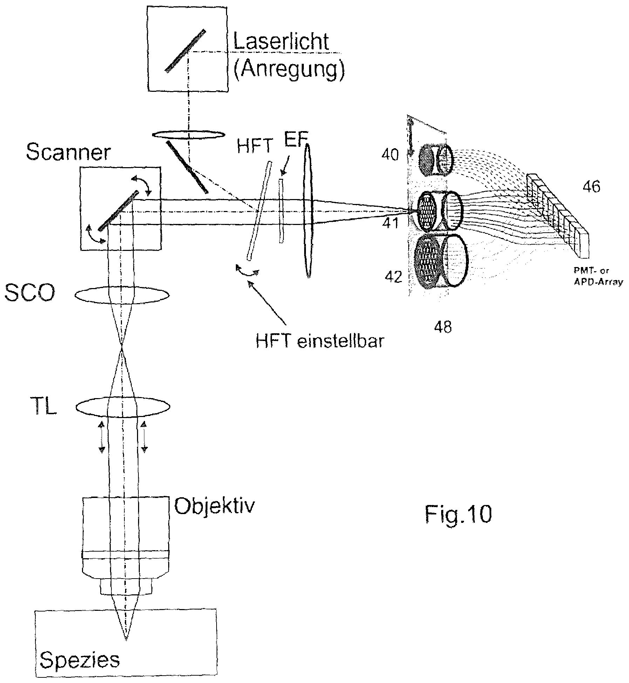

Möchte man optional oder vollständig auf ein Zoom-System oder eine einstellbare Fokussieroptik verzichten und trotzdem die notwendige Objektiv- und/oder Wellenlängenflexibilität gewährleisten, wird erfindungsgemäß vorgeschlagen, mehrere Faserbündel mit unterschiedlichen Durchmessern nebeneinander anzuordnen und die Einzelfasern der Bündel auf jeweils vorzugsweise das gleiche Detektorelement eines Detektor-Array enden zu lassen (Abb. 9,10). Das Faserbündel mit dem geeignetsten Sampling wird auf die optische Achse gefahren oder der Hauptfarbteiler im Beleuchtungsstrahlengang in passender Weise so geneigt (analog zu einer Justage des Pinholes mittels HFT), dass das ausgewählte Faserbündel beleuchtet wird und nur dieses Licht detektiert wird und schlussendlich in die Verrechnung einfließt.

Diese Verfahren zur Auswahl des geeigneten Faserbündels lassen sich sehr schnell schalten (im Vergleich zu einer Größenänderung des Airy-Scheibchens auf einem Faserbündel mittels eines Zoom-System), so dass diese Lösung insbesondere bei multispektralen Messungen besonders vorteilhaft ist.

Wenn die optimale Einstellung der Fokussieroptik (Abb.11) oder das beste Faserbündel (Abb. 10) gefunden ist, wird nach Umsortierung der Daten gemäß Sheppard et al. [2] der Bildkontrast erhöht sein (insbesondere für höhere Raumfrequenzen wegen der erzielten Auflösungssteigerung und/oder einer Verbesserung des SNR). Diese Optimierung der für die Auflösungsverbesserung geeignetsten Abtastung kann in einem geschlossenen Regelkreis durchgeführt werden (closed loop) (Abb. 11 Als Maß zum Auffinden der optimalen Einstellung bzw. des optimalen Faserbündels ist eine Kombination aus Kontrast und Signal-zu-Rausch Verhältnis besonders geeignet, da der optimale Fokus durch beide Bedingungen eindeutig definiert ist.

Bei dicken Proben mit einem hohen Anteil von außerfokalem Licht wird die Steuergröße SNR eine Fokussieroptikeinstellung oder ein Faserbündel bevorzugen, bei der mehrere Airy-Scheiben auf das Faserbündel abgebildet werden. Andererseits wird der Kontrast in einem rekonstruierten Bild (Rekonstruktion z.B. nach Sheppard et al., In Optik 80, No. 2, 53 (1982)) eine Detektionslichtabtastung bevorzugen, die für eine optimale Auflösung bevorzugt nur eine Airy-Scheibe auf das Faserbündel abbildet. Mit Hilfe von einem Regelparameter lässt sich das System zwischen Auslösung und SNR optimieren, wobei auf die Regelung die Eigenschaften der verwendeten Probe berücksichtigt.

Für eine Regelung können beispielsweise die Daten zu Beginn der Aufnahme eines Bildes verwendet werden, um innerhalb eines Bildes die Parameter (Fokussieroptikeinstellung) zu optimieren (falls das Bild schon am Rand repräsentative Informationen aufweist). Alternativ werden zunächst mittels Snapshots die relevanten Informationen zur Optimierung für eine ausgewählte Region im Bild, bei verminderter Laser-Beleuchtung und/oder erhöhter Scan-Geschwindigkeit durchgeführt.

Eine Alternative zu den genannten opto-mechanischen Ausführungen für das optimale (Sub-)Airy-Abtasten des Detektionslicht kann darin bestehen, von vornherein eine deutlich höhere Anzahl von Lichtleitfasern und Detektorelementen zu verwenden, z.B. 2 x 2 x 32 = 128, als prinzipiell notwendig. Die Optik muss dann nicht veränderlich sein.

Bei dieser Variante entstehen hohe Datenraten die aktuell von Echtzeit-Rechnern nicht verarbeitet werden können. Aus diesem Grunde ist es vorteilhaft, die Daten der z.B. 128 Kanäle auf 32 Kanäle herunterzusetzen. Für den Fall, dass genau 1 Airy auf das Faserbündel fällt, werden in einer detektornahen Elektronik (FPGA oder Microcontroller) jeweils z.B. 4 Kanäle zusammengefasst, so dass die zusammengefassten Kanäle die bekannte Anordnung besitzen. Für den Fall, dass sich gerade 2 Airy auf dem Faserbündel befinden, werden lediglich die inneren 32 Kanäle ausgelesen. Für Zwischenwerte muss je nach Größe der Airy-Scheibe auf dem Faserbündel eine passende Konfiguration gefunden werden, welche Fasern in einem Kanal zusammengefasst werden, um ein Auflösungssteigerung in jede laterale Richtung zu erzielen. Eine Interpolation im FPGA auf z.B. 32 Kanäle ist ebenfalls möglich.

Die Erfindung wird anhand der schematischen Darstellungen in Fig. 9-12 nachstehend weiter erläutert.

Die einzelnen Bezugszeichen (zusätzlich zu den Bezugszeichen der vorangehenden Darstellungen) bedeuten:
40,41,42: Faserbündel
43,44,45: Lichtleiter
46: Mehrkanaldetektor
47: Schwenkbarer Hauptfarbteiler
48: Schieber
R Regelkreis
49: Kontrolleinheit/ Rechner
50: Einstellbare Fokussieroptik
51: Signalzuordnung
52: Signalzuordnung
53: Fasereingänge
54,55,56: Verteilung Airydurchmesser auf Fasereingängen

Figur 9 zeigt in schematischer Darstellung ein Laser-Scanning-Mikroskop wie bereits anhand der Darstellungen in Fig.1-8 beschrieben, mit Sub-Airy ortsaufgelöster Detektion in der Pinhole-Ebene und Multi-Faserbündel-Anordnung.

Hier wird ein- und derselbe Mehrkanaldetektor, der ein PMT- oder APD Array - oder eine PMT- oder APD-Zeile sein kann von mehreren Faserbündeln beaufschlagt.

Die von Faserbündeln 40,41,42 stammenden Lichtleiter 43,44,45 liegen dabei vorteilhaft bezüglich ihrer einzelnen Faserenden auf den einzelnen Detektorelementen übereinander, so dass problemlos eine Detektion des Lichts aus den Faserenden des jeweils optisch wirksamen Faserbündels erfolgen kann.

Alternativ können auch nur jeweils zwei Faserenden auf dem jeweiligen Detektorelement übereinanderliegen und/oder nebeneinander liegende Abschnitte des Detektors für die Faserbündel unterschiedlicher Faserbündel genutzt werden.

Vorteilhaft erfolgt eine Beaufschlagung der Detektorelemente durch die einzelnen Faserbündel 40,41,42 nacheinander, indem jeweils eines der Faserbündel in Position zum Lichtspot gebracht wird, der vom Probenlicht gebildet auf die Eintrittsflächen der Faserbündel, wie schon weiter vorn beschrieben, abgebildet wird.

Hierbei kann es sich bei 40-42 um Faserbündel mit unterschiedlichen Faserdurchmessern und/ oder Faserabständen handeln.

Eine Anpassung durch Wechsel der Faserbündel kann beispielsweise bei einem Objektivwechsel des Objektives O und/ oder bei einem Wechsel der Beleuchtungswellenlänge erfolgen.

In Fig. 10 ist ein Schieber 48 dargestellt, der die Faserbündel 40-42 aufnimmt und der senkrecht zur optischen Achse verschiebbar ist, um die Faserbündel nacheinander in die optische Achse bringen zu können. Es ist auch möglich, dass der Schieber 48 lediglich die Blendenöffnung auf ein geeigneteres Faserbündel verschiebt und der flexible HFT das Detektionslicht auf dieses geeignetere Faserbündel ablenkt.

Alternativ dargestellt ist ein zur optischen Achse verschwenkbarer Hauptfarbteiler 47 um durch seine veränderliche Neigung unterschiedliche Faserbündel 40-42 optisch zu beaufschlagen.

Figur 11 zeigt die erfindungsgemäße Optimierung der Fluoreszenzlichtabtastung in einem geschlossenen Regelkreis mit Feed-Back-Signal.

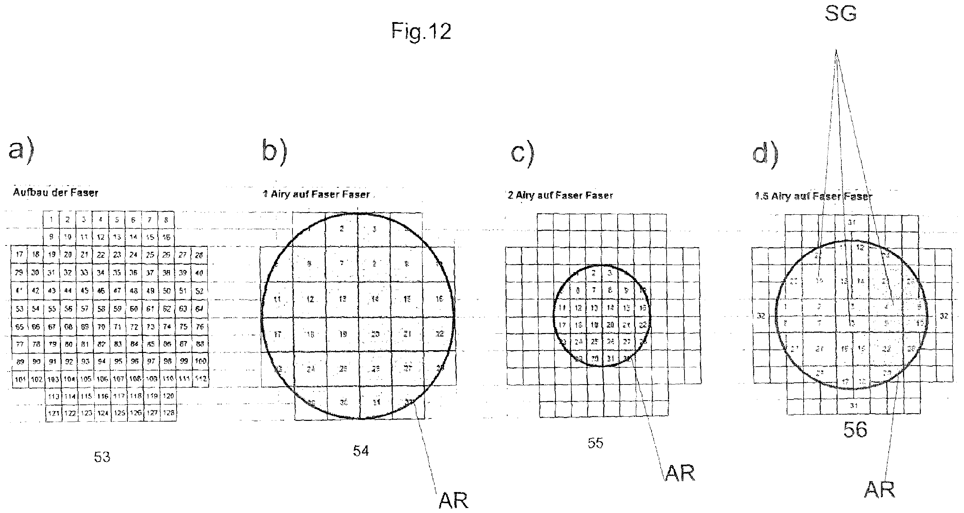

In Fig.11 ist ein vorteilhafter Regelkreis R dargestellt der auch anhand Fig. 12 weiter erläutert wird.

In Fig.11 erfolgt über eine Kontrolleinheit/ Rechner 49 anhand einer Auswertung von Bildeigenschaften wie dem Bildkontrast, beispielsweise nach der Bildung der Sheppard-Summe (die bereits eine verbesserte Auslösung aufweist), oder dem Signal/ Rauschverhältnis oder der Bildauflösung eine Einstellung beispielsweise einer einstellbaren Fokussieroptik 50 sowie ein Wechsel des Faserbündels wie in Fig. 10 bereits beschrieben.

Bei optimaler Einstellung der Fokussieroptik 50 sowie des Faserbündels 40-42 wird wegen einer Auflösungserhöhung und/ oder der Verbesserung des Signal / Rauschverhältnisses der Bildkontrast erhöht sein, insbesondere für höhere Raumfrequenzen.

Also kann vorteilhaft über die einzelnen oben beschriebenen Verstellungen und Einstellungen eine Optimierung des aufgenommenen Signals anhand der jeweiligen Bedingungen erfolgen.

Eine Kombination aus Kontrast und Signal / Rauschverhältnis als Regelgröße ist hierbei besonders geeignet da der optimale Fokus durch beide Bedingungen eindeutig definiert ist.

Hierzu kann auch vorteilhaft ein optimaler Auswerteprozess des Detektionslichtes durch zusammengefasstes Auslesen mehrerer Detektionsfasern 43-45 beitragen.

Fig. 12: Überabtastung des Detektionslichtes und optimales Binning um die Datenübertragungsrate ohne Auflösungsverlust zu reduzieren. a) Beispiel mit 128 Fasern und Detektorelementen. b) 1Airy wird auf die 128 Fasern abgebildet und anschließend wird vierfach gebinnt. c) 2Airy wird auf die 128 Fasern abgebildet, ausgelesen werden nur die 32 inneren Kanäle. d) 1.5Airy auf dem Gesamt-Faser-Array.

Für den Fall, dass genau ein Airy auf das Faserbündel fällt, werden in einer detektornahen Elektronik (FPGA oder Microcontroller) jeweils z.B. 4 Kanäle zusammengefasst, so dass die zusammengefassten Kanäle die bekannte Anordnung besitzen (Abb.12 b). Für den Fall, dass sich gerade 2 Airy auf dem Faserbündel befinden, werden lediglich die inneren 32 Kanäle ausgelesen (Abb.12c). Für Zwischenwerte muss je nach Größe der Airy-Scheibe auf dem Faserbündel eine passende Konfiguration gefunden werden, welche Fasern in einem Kanal zusammengefasst werden, um ein Auflösungssteigerung in jede laterale Richtung zu erzielen. Eine Interpolation im FPGA auf z.B. 32 Kanäle ist ebenfalls möglich. Abb.12d) zeigt ein Beispiel für die genannte Situation.

Alternativ zur Umverteilung der Messignale wie in Fig.12d, wo jede Faser jeweils genau einem Kanal zugeordnet ist, ist es möglich, die D Signale einer Faser in einem FPGD auf mehrere Kanäle zu verteilen, beispielsweise mittelös Algorithmen die bei der Skalierung von Bildern fachüblich sind.

In Fig.12 a) sind beispielhaft Fasereingänge 53 dargestellt wobei im Wesentlichen jedem dieser Fasereingänge 53 ein Detektorelement 1-128 auf dem Detektorarray zugeordnet ist.

In Fig. 12 b) ist anhand von zu 32 Segmenten zusammengefassten Faserneingängen 54 eine Zusammenfassung der Signale mehrerer Detektorelemente dargestellt, zugeordnet zu den Einzelfasern für 32 erzeugte Detektionssignale Dies ermöglicht für den dargestellten Airydurchmesser des Lichtspots AR eine Reduktion der Detektionskanläle.

Vorteilhaft kann dadurch die Datenübertragungsrate ohne Übertragungsverlust reduziert werden

In Fig.12 c) ist (siehe Fig.11) der Airydurchmesser AR um den Faktor 2 kleiner und wird damit von einer kleineren Anzahl von Fasereintrittsenden abgetastet.

Hier werden auch nur die erfassten inneren Kanäle, hier die inneren 32 aus Fig.12 a, ausgelesen.

In Fig. 12 d) ist das AR um den Faktor 1,5 kleiner als das Faserbündel.

Hier ist anhand von unterschiedlich grossen Einzelsegmenten SG dargestellt, dass auch ein unterschiedliches Binning von ausgelesenen Detektionssignalen erfolgen kann indem unterschiedlich viele Fasern zu unterschiedlich großen Segmenten SG zusammengefasst werden.

Die unterschiedliche Zusammenfassung von Detektionskanälen der dazugehörigen Einzeldetektoren des Detektionsarray 56 über die Lichtleitfasern wie in Fig. 12 b)-d) dargestellt, kann vorteilhaft zeitgleich oder vor - oder nach einer Anpassung des Airydurchmessers des Lichtspots durch Einstellung über eine variable Optik 50 erfolgen und anhand des aufgenommenen Signals oder des erzeugten Probenbildes wird anhand oben beschriebener Kriterien (Kontrast u.a.) ein Optimierungsprozess über einen Regelkreis, wie anhand Fig.11 beschrieben durchgeführt.

Die Zusammenfassung der Detektionskanäle stellt auch eine vorteilhafte Alternative zur Anpassung mit einer variablen Optik 50 dar.

Hierbei kann zusätzlich ein Austausch der Faserbündel wie in Fig.9, 10 erfolgen und auch dafür die Optimierung der Signal- bzw. Bildaufnahme erfolgen.

Dies erfolgt durch beispielsweise durch jeweiligen Vergleich von mehreren unter unterschiedliche Bedingungen aufgenommenen Bildern der Probe oder einer Testprobe.

## Patentansprüche

1. Mikroskop zur hochauflösenden Scanning-Mikroskopie einer Probe (2), mit
- einer Beleuchtungseinrichtung (3) zum Beleuchten der Probe (2),
- einer Abbildungseinrichtung (4) zum Scannen mindestens eines Punkt- oder Linien-Spots (14) über die Probe (2) und zum Abbilden des Punkt- oder Linien-Spots (14) in ein beugungsbegrenztes, ruhendes Einzelbild (17) in eine Detektionsebene (18),
- einer Detektoreinrichtung (19) zum Erfassen des Einzelbildes (17) in der Detektionsebene (18) für verschiedene Scanpositionen mit einer Ortauflösung,
- einer Auswerteeinrichtung (C) zum Auswerten einer Beugungsstruktur des Einzelbildes (17) für die Scanpositionen aus Daten der Detektoreinrichtung (19) und zum Erzeugen eines Bildes der Probe (17), das eine Auflösung aufweist, die über die Beugungsgrenze gesteigert ist, wobei die Detektoreinrichtung (19) aufweist:
- ein Detektorarray (24), das Pixel (25) aufweist und größer ist als das Einzelbild (17), und
- ein nicht-abbildendes Umverteilungselement (20-21; 30-34; 30-35), das dem Detektorarray (24) vorgeordnet ist und die Strahlung aus der Detektionsebene (18) nicht-abbildend auf die Pixel (25) des Detektorarrays (24) verteilt,
**gekennzeichnet durch** mehrere Umverteilungselemente, die dem Detektorarray (24) vorgeordnet sind,
- wobei für mindestens einen Teil der Pixel (25) des Detektorarrays (24) den einzelnen Pixeln (25) jeweils Strahlung aus mindestens zwei Umverteilungselementen zugeordnet ist
- wobei die Umverteilungselemente Faserbündel (20, 40, 41, 42) sind, die sich in der Anzahl der Fasern und/oder der Anordnung der Fasern und/oder dem Faserdurchmesser und/oder der Form des Faserquerschnitts unterscheiden, wobei die Umverteilungselemente je ein Bündel (20, 40, 41, 42) aus Lichtleitfasern (21, 43, 44, 45) umfassen, welches einen Eingang (22) und einen Ausgang (23) aufweist, an dem die Lichtleitfasern (21, 43, 44, 45) in einer geometrischen Anordnung, welche sich von der des Eingangs (22) unterscheidet, an den Pixeln (25) des Detektorarrays (24) enden,- wobei an den einzelnen Pixeln (25) mindestens zwei Lichtleitfasern (21, 43, 44, 45) aus unterschiedlichen Umverteilungselementen enden,
- wobei die Umverteilungselemente in die optische Achse zur Detektion des Probenlichtes einschwenkbar oder einschiebbar angeordnet sind, so dass der Eingang (22) in der Detektionsebene (18) angeordnet ist.

2. Mikroskop nach Anspruch 1, wobei die Lichtleitfasern Multi-Mode Lichtleitfasern sind.

3. Mikroskop nach Anspruch 1 oder 2, **dadurch gekennzeichnet, daß** die Lichtleitfasern (21) so vom Eingang (22) zum Ausgang (23) laufen, daß am Ausgang (23) benachbarte Lichtleitfasern (21) auch am Eingang (22) benachbart sind, um ein strahlungsintensitätsabhängiges Übersprechen nebeneinanderliegender Pixel (25) zu minimieren.

4. Mikroskop nach einem der obigen Ansprüche, **dadurch gekennzeichnet, daß** die Abbildungseinrichtung (4) eine der Detektionsebene (18) in Abbildungsrichtung vorgeordnete Zoomoptik (27) zur Anpassung der Größe des Einzelbildes (17) an die der Detektoreinrichtung (19) aufweist.

5. Mikroskop nach Anspruch 4, **dadurch gekennzeichnet, daß** die Beleuchtungseinrichtung (3) und die Abbildungseinrichtung (4) sich eine Scaneinrichtung (10) teilen, so daß die Beleuchtungseinrichtung (3) die Probe (2) mit einem beugungsbegrenzten Punkt- oder Linien-Spot beleuchtet, der mit dem von der Abbildungseinrichtung abgebildeten Spot (14) zusammenfällt, wobei die Zoomoptik (27) so angeordnet ist, daß sie auch Bestandteil der Beleuchtungseinrichtung (3) ist.

6. Verfahren zur hochauflösenden Scanning-Mikroskopie einer Probe (2), bei dem
- die Probe (2) beleuchtet wird,
- mindestens ein scannend über die Probe (2) geführter Punkt- oder Linien-Spot (14) in ein Einzelbild (17) abgebildet wird, wobei der Spot (14) beugungsbegrenzt in das Einzelbild (17) abgebildet wird und das Einzelbild (17) ruhend in einer Detektionsebene (18) liegt,
- für verschiedene Scanpositionen das Einzelbild (17) mit einer Ortauflösung erfaßt wird, so daß eine Beugungsstruktur des Einzelbildes (17) erfaßt wird,
- für jede Scanposition die Beugungsstruktur des Einzelbildes (17) ausgewertet wird und ein Bild der Probe (2) erzeugt wird, das eine Auflösung aufweist, die über die Beugungsgrenze gesteigert ist, wobei
- ein Detektorarray (24) bereitgestellt wird, das Pixel (25) aufweist und größer ist als das Einzelbild (17), und
- Strahlung des Einzelbildes aus der Detektionsebene (18) nicht-abbildend auf die Pixel (25) des Detektorarrays (24) umverteilt wird,
**gekennzeichnet durch** mehrere Umverteilungselemente, die dem Detektorarray vorgeordnet sind,
- wobei für mindestens einen Teil der Pixel (25) des Detektorarrays (24) den einzelnen Pixeln (25) jeweils Strahlung aus mindestens zwei Umverteilungselementen zugeordnet wird,
- wobei die Umverteilungselemente Faserbündel sind die sich in der Anzahl der Fasern und/oder der Anordnung der Fasern und/oder dem Faserdurchmesser und/oder der Form des Faserquerschnitts unterscheiden, wobei die Umverteilungselemente je ein Bündel (20, 40, 41, 42) aus Lichtleitfasern (21, 43, 44, 45) umfassen, welches einen Eingang (22) und einen Ausgang (23) aufweist, an dem die Lichtleitfasern (21, 43, 44, 45) in einer geometrischen Anordnung, welche sich von der des Eingangs (22) unterscheidet, an den Pixeln (25) des Detektorarrays (24) enden,
- wobei an den einzelnen Pixeln (25) mindestens zwei Lichtleitfasern aus unterschiedlichen Umverteilungselementen enden,
- wobei die Umverteilungselemente nacheinander in die optische Achse zur Detektion des Probenlichtes eingeschwenkt oder eingeschoben werden.

7. Verfahren nach Anspruch 6, wobei die Lichtleitfasern Multi-Mode Lichtleitfasern sind.

8. Verfahren nach Anspruch 6 oder 7, **dadurch gekennzeichnet, daß** die Lichtleitfasern (21) so vom Eingang (22) zum Ausgang (23) geführt werden, daß am Ausgang (23) benachbarte Lichtleitfasern (21) auch am Eingang (22) benachbart sind, um ein strahlungsintensitätsabhängiges Übersprechen nebeneinanderliegender Pixel (25) zu minimieren.

9. Verfahren nach Anspruch 6, 7 oder 8, **dadurch gekennzeichnet, daß** das Bündel (20) aus Lichtleitfasern (21) und das Detektorarray (24) kalibriert werden, indem jede Lichtleitfaser (21) einzeln mit Strahlung beaufschlagt wird, Störsignal in Pixeln (25), die am Ausgang (23) benachbarten Lichtleitfasern (21) zugeordnet sind, erfaßt werden und eine Kalibriermatrix aufgestellt wird, mit der bei Mikroskopie der Probe (2) ein strahlungsintensitätsabhängiges Übersprechen nebeneinanderliegender Pixel (25) korrigiert wird.

10. Verfahren nach einem der Ansprüche 6 bis 9, **dadurch gekennzeichnet, daß** eine Bewegungsrichtung des Scannens des Punkt- oder Linien-Spots (14) ermittelt wird, indem Signale einzelner Pixel (25) des Detektorarrays (24) mittels Kreuzkorrelation ausgewertet werden.

11. Verfahren nach einem der Ansprüche 6 bis 10, **dadurch gekennzeichnet, daß** Veränderungen in der Probe (2) erfaßt werden, indem bei in der Probe (2) ruhendem Punkt- oder Linien-Spot (14) eine zeitliche Veränderung des beugungsbegrenzten Einzelbildes (17) ermittelt und ausgewertet wird.

12. Mikroskop nach einem der Ansprüche 1 bis 5, **gekennzeichnet durch** eine oder mehrere der folgenden Ausführungen: - wobei durch Zusammenschalten von Einzelpixeln bei der Signalauswertung die Anzahl der Einzelsignale des Detektorarrays verringerbar ist,
- wobei in einem Regelkreis durch Wechsel von Umverteilungselementen und/oder Einstellung einer Zoomoptik/Fokussieroptik zur Anpassung der Bildgröße und/oder Zusammenschalten von Einzelpixeln des Detektorarrays anhand eines Regelsignals eine Einstellung erfolgt, wobei insbesondere die Einstellung als Regelgröße den Bildkontrast und/oder die Bildschärfe und/oder das Signal/ Rauschverhältnis beinhaltet,
- wobei in einer dem Detektorarray nachgeschalteten Auswerteschaltung, selektiv Kanäle auslesbar und/oder zur weiteren Verarbeitung zusammenfassbar sind.

13. Verfahren nach einem der Ansprüche 6 bis 11, **gekennzeichnet durch** eine oder mehrere der folgenden Ausführungen: - wobei durch Zusammenschalten von Einzelpixeln bei der Signalauswertung die Anzahl der Einzelsignale des Detektorarrays verringert wird,
- wobei ein Auslesen der Detektorpixel nur in Bereichen erfolgt die zumindest teilweise von Probenlicht beaufschlagt werden,
- wobei in einem Regelkreis durch Wechsel von Umverteilungselementen und/oder Einstellung einer Zoomoptik/Fokussieroptik zur Anpassung der Bildgröße und/oder Zusammenschalten von Einzelpixeln des Detektorarrays anhand eines Regelsignals eine Einstellung erfolgt,
- wobei die Einstellung als Regelgröße den Bildkontrast und/oder die Bildschärfe und/oder das Signal/ Rauschverhältnis beinhaltet
- wobei in einer dem Detektorarray nachgeschalteten Auswerteschaltung, selektiv Kanäle ausgelesen und/oder zur weiteren Verarbeitung zusammengefaßt werden.

## Claims

1. Microscope for high-resolution scanning microscopy of a sample (2), comprising
- an illumination device (3) for illuminating the sample (2),
- an imaging device (4) for scanning at least one point spot or line spot (14) over the sample (2) and for imaging the point spot or line spot (14) into a diffraction-limited, static individual image (17) into a detection plane (18),
- a detector device (19) for capturing the individual image (17) in the detection plane (18) for different scanning positions with a spatial resolution,
- an evaluation device (C) for evaluating a diffraction structure of the individual image (17) for the scanning positions from data of the detector device (19) and for generating an image of the sample (17) having a resolution that goes beyond the diffraction limit, wherein the detector device (19) has:
- a detector array (24) that has pixels (25) and is larger than the frame (17), and
- a non-imaging redistribution element (20-21; 30-34; 30-35), which is arranged upstream of the detector array (24) and distributes the radiation from the detection plane (18) in a non-imaging manner over the pixels (25) of the detector array (24),
**characterized by** a plurality of redistribution elements arranged upstream of the detector array (24),
- wherein radiation from at least two redistribution elements is assigned in each case to the individual pixels (25) for at least some of the pixels (25) of the detector array (24),
- wherein the redistribution elements are fibre bundles (20, 40, 41, 42) that differ from one another in terms of the number of fibres and/or the arrangement of the fibres and/or the fibre diameter and/or the shape of the fibre cross section, wherein the redistribution elements each comprise one bundle (20, 40, 41, 42) of optical fibres (21, 43, 44, 45) that has an entrance (22) and an exit (23) at which the optical fibres (21, 43, 44, 45) terminate at the pixels (25) of the detector array (24) in a geometric arrangement that differs from that of the entrance (22),
- wherein at least two optical fibres (21, 43, 44, 45) from different redistribution elements terminate at the individual pixels (25),
- wherein the redistribution elements are arranged so as to be able to be pivoted or inserted into the optical axis for detecting the sample light with the result that the entrance (22) is arranged in the detection plane (18) .

2. Microscope according to Claim 1, wherein the optical fibres are multimode optical fibres.

3. Microscope according to Claim 1 or 2, **characterized in that** the optical fibres (21) extend from the entrance (22) to the exit (23) such that optical fibres (21) that are adjacent at the exit (23) are also adjacent at the entrance (22) so as to minimize a radiation-intensity-dependent crosstalk of mutually adjacent pixels (25).

4. Microscope according to one of the preceding claims, **characterized in that** the imaging device (4) has a zoom optical unit (27), arranged upstream of the detection plane (18) in the imaging direction, for adapting the size of the frame (17) to the detector device (19).

5. Microscope according to Claim 4, **characterized in that** the illumination device (3) and the imaging device (4) share a scanning device (10) such that the illumination device (3) illuminates the sample (2) with a diffraction-limited point spot or line spot that coincides with the spot (14) that is imaged by the imaging device, wherein the zoom optical unit (27) is arranged such that it is also a constituent part of the illumination device (3).

6. Method for high-resolution scanning microscopy of a sample (2), in which
- the sample (2) is illuminated,
- at least one point spot or line spot (14) that is guided in a scanning manner over the sample (2) is imaged into a frame (17), wherein the spot (14) is imaged into the frame (17) in a diffraction-limited manner and the frame (17) is static in a detection plane (18),
- the frame (17) is captured for different scanning positions with a spatial resolution such that a diffraction structure of the frame (17) is captured,
- the diffraction structure of the frame (17) is evaluated for each scanning position and an image of the sample (2) that has a resolution that goes beyond the diffraction limit is generated, wherein
- a detector array (24) that has pixels (25) and is larger than the frame (17) is provided, and
- radiation of the frame from the detection plane (18) is redistributed in a non-imaging manner over the pixels (25) of the detector array (24),
**characterized by** a plurality of redistribution elements that are arranged upstream of the detector array,
- wherein radiation from at least two redistribution elements is assigned in each case to the individual pixels (25) for at least some of the pixels (25) of the detector array (24),
- wherein the redistribution elements are fibre bundles that differ from one another in terms of the number of fibres and/or the arrangement of the fibres and/or the fibre diameter and/or the shape of the fibre cross section, wherein the redistribution elements each comprise one bundle (20, 40, 41, 42) of optical fibres (21, 43, 44, 45) that has an entrance (22) and an exit (23) at which the optical fibres (21, 43, 44, 45) terminate at the pixels (25) of the detector array (24) in a geometric arrangement that differs from that of the entrance (22),
- wherein at least two optical fibres from different redistribution elements terminate at the individual pixels (25),
- wherein the redistribution elements are pivoted or inserted successively into the optical axis for detecting the sample light.

7. Method according to Claim 6, wherein the optical fibres are multimode optical fibres.

8. Method according to Claim 6 or 7, **characterized in that** the optical fibres (21) are guided from the entrance (22) to the exit (23) such that optical fibres (21) that are adjacent at the exit (23) are also adjacent at the entrance (22) so as to minimize a radiation-intensity-dependent crosstalk of mutually adjacent pixels (25).

9. Method according to Claim 6, 7 or 8, **characterized in that** the bundle (20) of optical fibres (21) and the detector array (24) are calibrated by supplying radiation to each optical fibre (21) individually, parasitic signals in pixels (25) that are assigned to optical fibres (21) that are adjacent at the exit (23) are captured and a calibration matrix with which a radiation-intensity-dependent crosstalk of mutually adjacent pixels (25) is corrected during the microscopy of the sample (2) is established.

10. Method according to one of Claims 6 to 9, **characterized in that** a movement direction of the scanning of the point spot or line spot (14) is ascertained by evaluating signals of individual pixels (25) of the detector array (24) by means of cross correlation.

11. Method according to one of Claims 6 to 10, **characterized in that** changes in the sample (2) are captured by ascertaining and evaluating a change of the diffraction-limited frame (17) over time in the point spot or line spot (14) that is static in the sample (2).

12. Microscope according to one of Claims 1 to 5, **characterized by** one or more of the following embodiments:
- wherein the number of the individual signals of the detector array is able to be decreased by interconnecting individual pixels during the signal evaluation,
- wherein a setting is effected in a closed-loop control circuit by changing redistribution elements and/or setting a zoom optical unit/focusing optical unit for adapting the image size and/or interconnection of individual pixels of the detector array based on a closed-loop control signal, wherein in particular the setting contains as the closed-loop control variable the image contrast and/or the image sharpness and/or the signal-to-noise ratio,
- wherein channels are selectively readable and/or combinable for further processing in an evaluation circuit that is connected downstream of the detector array.

13. Method according to one of Claims 6 to 11, **characterized by** one or more of the following embodiments:
- wherein the number of the individual signals of the detector array is decreased by interconnecting individual pixels during the signal evaluation,
- wherein the detector pixels are read only in regions that are supplied at least partially with sample light,
- wherein a setting is effected in a closed-loop control circuit by changing redistribution elements and/or setting a zoom optical unit/focusing optical unit for adapting the image size and/or interconnection of individual pixels of the detector array based on a closed-loop control signal,
- wherein the setting contains as the closed-loop control variable the image contrast and/or the image sharpness and/or the signal-to-noise ratio,
- wherein in an evaluation circuit connected downstream of the detector array, channels are selectively read and/or combined for further processing.

## Revendications

1. Microscope pour la microscopie par balayage à haute résolution d'un échantillon (2), comprenant
- un dispositif d'éclairage (3) destiné à éclairer l'échantillon (2),
- un dispositif d'imagerie (4) destiné à balayer au moins un point ponctuel ou linéaire (14) au-dessus de l'échantillon (2) et à représenter le point ponctuel ou linéaire (14) dans une image individuelle (17) statique limitée par diffraction dans un plan de détection (18),
- un dispositif détecteur (19) destiné à capturer l'image individuelle (17) dans le plan de détection (18) pour différentes positions de balayage avec une résolution spatiale,
- un dispositif d'interprétation (C) destiné à interpréter une structure de diffraction de l'image individuelle (17) pour les positions de balayage à partir des données du dispositif détecteur (19) et à générer une image de l'échantillon (17), laquelle présente une résolution qui a augmenté au-dessus de la limitation par diffraction, le dispositif détecteur (19) possédant :
- un réseau de détecteurs (24) qui possède des pixels (25) et qui est plus grand que l'image individuelle (17), et
- un élément de redistribution (20-21 ; 30-34 ; 30-35) non formateur d'image, qui est placé en amont du réseau de détecteurs (24) et qui distribue le rayonnement issu du plan de détection (18) sans former d'image sur les pixels (25) du réseau de détecteurs (24),
**caractérisé par** plusieurs éléments de redistribution qui sont placés en amont du réseau de détecteurs (24),
- pour au moins une partie des pixels (25) du réseau de détecteurs (24), le rayonnement provenant d'au moins deux éléments de redistribution étant respectivement attribué aux pixels (25) individuels,
- les éléments de redistribution étant des faisceaux de fibres (20, 40, 41, 42) qui se différencient par le nombre de fibres et/ou la disposition des fibres et/ou le diamètre des fibres et/ou la forme de la section transversale des fibres, les éléments de redistribution comprenant chacun un faisceau (20, 40, 41, 42) de fibres optiques (21, 43, 44, 45), lequel possède une entrée (22) et une sortie (23), à laquelle les fibres optiques (21, 43, 44, 45) se terminent au niveau des pixels (25) du réseau de détecteurs (24) dans une disposition géométrique qui est différente de celle de l'entrée (22), au moins deux fibres optiques (21, 43, 44, 45) provenant d'éléments de redistribution différents se terminant au niveau des pixels (25) individuels,
- les éléments de redistribution étant disposés de manière à pouvoir être pivotés ou insérés dans l'axe optique en vue de détecter la lumière de l'échantillon, de sorte que l'entrée (22) est disposée dans le plan de détection (18).

2. Microscope selon la revendication 1, les fibres optiques étant des fibres optiques multimodales.

3. Microscope selon la revendication 1 ou 2, **caractérisé en ce que** les fibres optiques (21) cheminent de l'entrée (22) vers la sortie (23) de telle sorte que les fibres optiques (21) voisines à la sortie (23) sont également voisines à l'entrée (22) afin de réduire au minimum une diaphonie dépendante de l'intensité du rayonnement des pixels (25) juxtaposés.

4. Microscope selon l'une des revendications précédentes, **caractérisé en ce que** le dispositif d'imagerie (4) possède une optique de grossissement (27) placée en amont du plan de détection (18) dans la direction d'imagerie, destinée à adapter la taille de l'image individuelle (17) à celle du dispositif détecteur (19).

5. Microscope selon la revendication 4, **caractérisé en ce que** le dispositif d'éclairage (3) et le dispositif d'imagerie (4) se partagent un dispositif de balayage (10), de sorte que le dispositif d'éclairage (3) éclaire l'échantillon (2) avec un point ponctuel ou linéaire limité par diffraction, lequel coïncide avec le point (14) représenté par le dispositif d'imagerie, l'optique de grossissement (27) étant disposée de telle sorte qu'elle est également un élément constitutif du dispositif d'éclairage (3).

6. Procédé de microscopie par balayage à haute résolution d'un échantillon (2), avec lequel
- l'échantillon (2) est éclairé,
- au moins un point ponctuel ou linéaire (14) guidé en balayage au-dessus de l'échantillon (2) est représenté dans une image individuelle (17), le point (14) étant représenté dans l'image individuelle (17) avec limitation par diffraction et l'image individuelle (17) se trouvant statique dans un plan de détection (18),
- l'image individuelle (17) est capturée pour différentes positions de balayage avec une résolution spatiale, de sorte qu'une structure de diffraction de l'image individuelle (17) est capturée,
- la structure de diffraction de l'image individuelle (17) est interprétée pour chaque position de balayage et une image de l'échantillon (2) est générée, laquelle présente une résolution qui a augmenté au-dessus de la limitation par diffraction,
- un réseau de détecteurs (24) étant fourni, lequel possède des pixels (25) et est plus grand que l'image individuelle (17), et
- le rayonnement de l'image individuelle issu du plan de détection (18) est redistribué sans former d'image sur les pixels (25) du réseau de détecteurs (24), **caractérisé par** plusieurs éléments de redistribution qui sont placés en amont du réseau de détecteurs,
- pour au moins une partie des pixels (25) du réseau de détecteurs (24), le rayonnement provenant d'au moins deux éléments de redistribution étant respectivement attribué aux pixels (25) individuels,
- les éléments de redistribution étant des faisceaux de fibres qui se différencient par le nombre de fibres et/ou la disposition des fibres et/ou le diamètre des fibres et/ou la forme de la section transversale des fibres, les éléments de redistribution comprenant chacun un faisceau (20, 40, 41, 42) de fibres optiques (21, 43, 44, 45), lequel possède une entrée (22) et une sortie (23), à laquelle les fibres optiques (21, 43, 44, 45) se terminent au niveau des pixels (25) du réseau de détecteurs (24) dans une disposition géométrique qui est différente de celle de l'entrée (22),
- au moins deux fibres optiques provenant d'éléments de redistribution différents se terminant au niveau des pixels (25) individuels,
- les éléments de redistribution étant pivotés ou insérés l'un après l'autre dans l'axe optique en vue de détecter la lumière de l'échantillon.

7. Procédé selon la revendication 6, les fibres optiques étant des fibres optiques multimodales.

8. Procédé selon la revendication 6 ou 7, **caractérisé en ce que** les fibres optiques (21) sont guidées de l'entrée (22) vers la sortie (23) de telle sorte que les fibres optiques (21) voisines à la sortie (23) sont également voisines à l'entrée (22) afin de réduire au minimum une diaphonie dépendante de l'intensité du rayonnement des pixels (25) juxtaposés.

9. Procédé selon la revendication 6, 7 ou 8, **caractérisé en ce que** le faisceau (20) de fibres optiques (21) et le réseau de détecteurs (24) sont étalonnés en soumettant chaque fibre optique (21) individuellement au rayonnement, en capturant le signal parasite dans les pixels (25) qui sont associés à la sortie (23) de fibres optiques (21) voisines et en établissant une matrice d'étalonnage avec laquelle une diaphonie dépendante de l'intensité du rayonnement des pixels (25) juxtaposés est corrigée lors de la microscopie de l'échantillon (2).

10. Procédé selon l'une des revendications 6 à 9, **caractérisé en ce qu'**un sens de déplacement du balayage du point ponctuel ou linéaire (14) est déterminé en interprétant les signaux des pixels (25) individuels du réseau de détecteurs (24) au moyen d'une corrélation croisée.

11. Procédé selon l'une des revendications 6 à 10, **caractérisé en ce que** les modifications dans l'échantillon (2) sont capturées en déterminant et en interprétant une modification dans le temps de l'image individuelle (17) à limitation par diffraction, avec un point ponctuel ou linéaire (14) statique dans l'échantillon (2).

12. Microscope selon l'une des revendications 1 à 5, **caractérisé par** une ou plusieurs des explications suivantes :
- le nombre de signaux individuels du réseau de détecteurs peut être réduit en interconnectant les pixels individuels lors de l'interprétation du signal,
- un réglage est effectué dans un circuit de régulation à l'aide d'un signal de régulation par changement des éléments de redistribution et/ou réglage d'une optique de grossissement/optique de mise au point en vue d'adapter la taille d'image et/ou interconnexion des pixels individuels du réseau de détecteurs, le réglage contenant notamment comme grandeur de régulation le contraste d'image et/ou la netteté d'image et/ou le rapport signal/bruit,
- des canaux pouvant être lus de manière sélective et/ou regroupés en vue d'un traitement supplémentaire dans un circuit d'interprétation branché en aval du réseau de détecteurs.

13. Procédé selon l'une des revendications 6 à 11, **caractérisé par** une ou plusieurs des explications suivantes :
- le nombre de signaux individuels du réseau de détecteurs est réduit en interconnectant les pixels individuels lors de l'interprétation du signal,
- une lecture des pixels de détecteur est effectuée uniquement dans les zones qui sont au moins partiellement chargées par la lumière de l'échantillon,
- un réglage est effectué dans un circuit de régulation à l'aide d'un signal de régulation par changement des éléments de redistribution et/ou réglage d'une optique de grossissement/optique de mise au point en vue d'adapter la taille d'image et/ou interconnexion des pixels individuels du réseau de détecteurs
- le réglage contenant comme grandeur de régulation le contraste d'image et/ou la netteté d'image et/ou le rapport signal/bruit,
- des canaux pouvant être lus de manière sélective et/ou regroupés en vue d'un traitement supplémentaire dans un circuit d'interprétation branché en aval du réseau de détecteurs.
